# EUROPÄISCHE PATENTSCHRIFT

(11) **EP 0 384 936 B1**
(45) Veröffentlichungstag und Bekanntmachung des Hinweises auf die Patenterteilung: **15.06.1994**
(21) Anmeldenummer: 89103798.8
(22) Anmeldetag: 03.03.1989
(51) Int. Cl.: H04L 12/56

(54) **Verfahren und Schaltungsanordnung zum Weiterleiten von auf Zubringerleitungen übertragenen Nachrichtenpaketen über eine Paketvermittlungseinrichtung**
Method and circuit arrangement for forwarding information packets from incoming links via a packet-switching device
Procédé et dispositif pour transmettre des paquets d'information provenant de lignes d'entrée via un dispositif à communication de paquets

(43) Veröffentlichungstag der Anmeldung: 05.09.1990
(73) Patentinhaber: SIEMENS AKTIENGESELLSCHAFT, 80333 München (DE)
(72) Erfinder: Göldner, Ernst-Heinrich, Dr.-Ing., D-8000 München 90 (DE)

(56) Entgegenhaltungen:
- EP-A- 0 108 555
- PROCEEDINGS SEVENTH ANNUAL JOINT CONFERENCE OF THE IEEE COMPUTER ANDCOMMUNICATIONS SOCIETIES, Toronto, März 1988, Seiten 19-28, IEEE, New York, US; P. NEWMAN: "A broad-band packet switch for multi-service communications"
- IEEE GLOBAL TELECOMMUNICATIONS CONFERENCE, Atlanta, Georgia, 26.-29. März 1984, vol. 1, Seiten 114-120, IEEE, New York, US; D.M. DIAS et al.: "Packet switching in N log N multistage networks"

## Beschreibung

Die Erfindung betrifft ein Verfahren und eine Schaltungsanordnung zum Weiterleiten von auf Zubringerleitungen im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache aufweisende Paketvermittlungseinrichtung zu mit dieser verbundenen Abnehmerleitungen hin.

Vermittlungseinrichtungen für Kommunikationsnetze müssen einen ununterbrochenen, störungsfreien Vermittlungsbetrieb ermöglichen. Da einzelne Bauelemente aber eine gewisse Ausfallwahrscheinlichkeit aufweisen, muß die Struktur einer Vermittlungseinrichtung so gewählt sein, daß trotz des Ausfalls einzelner Komponente der störungsfreie Betrieb des gesamten Systems gewährleistet ist. In diesem Zusammenhang ist es bereits bekannt (z. B. aus "Unterrichtsblätter der Deutschen Bundespost", Jahrgang 25/1972, Nr. 11, Seiten 263 bis 266), zentrale Einrichtungen eines Datenvermittlungssystems redundant auszulegen. Durch diese Redundanz ist sichergestellt, daß bei Ausfall einer der zentralen Einrichtungen Ersatzwege geschaltet werden können. Dafür ist es jedoch erforderlich, in dem Datenvermittlungssystem entsprechende Überwachungs- und Steuerungsmaßnahmen vorzusehen.

Aus der Offenlegungsschrift EP-A-0 108 555 ist bereits eine redundante Paketvermittlungseinrichtung bekannt.

Es ist nun Aufgabe der vorliegenden Erfindung, einen Weg zu zeigen wie bei einem Verfahren und einer Schaltungsanordnung der eingangs genannten Art mit einem geringen Steuerungsaufwand eine redundante Paketvermittlungseinrichtung realisiert werden kann.

Gelöst wird die vorstehend aufgezeigte Aufgabe bei einem Verfahren der eingangs genannten Art erfindungsgemäß dadurch, daß für jedes der auf einer der Zubringerleitungen im Zuge einer virtuellen Verbindung übertragenen Nachrichtenpakete durch Vermehrfachen eine Nachrichtenpaket-Gruppe mit einer der Anzahl der redundanten Koppelvielfache entsprechenden Anzahl von identischen Nachrichtenpaketen gebildet wird, daß jedem der Nachrichtenpakete einer Nachrichtenpaket-Gruppe eine identische, für aufeinanderfolgende Nachrichtenpaket-Gruppen sich ändernde Zusatzkennung beigefügt wird, daß die Nachrichtennpakete einer Nachrichtenpaket-Gruppe getrennt über die redundanten Koppelvielfache in Richtung zu der für die jeweilige virtuelle Verbindung in Frage kommenden Abnehmerleitung hin übertragen werden und daß nach einer solchen Übertragung über die redundanten Koppelvielfache anhand der den Nachrichtenpaketen jeweils beigefügten Zusatzkennung lediglich eines der zu einer Nachrichtenpaket-Gruppe gehörenden Nachrichtenpakete an die in Frage kommende Abnehmerleitung weitergeleitet wird.

Die Erfindung bringt den Vorteil mit sich, daß in einer Paketvermittlungseinrichtung ein störungsfreier Vermittlungsbetrieb noch möglich ist, solange für jede der virtuellen Verbindungen ein durchgehender Pfad über eines der Koppelvielfache vorhanden ist. Die Redundanz besteht hierbei auf der Ebene der virtuellen Verbindungen und nicht auf der Ebene von innerhalb der Paketvermittlungseinrichtung verlaufenden Übertragungsleitungen. Durch die Redundanz auf der Ebene von virtuellen Verbindungen bleibt die Auswirkung eines gestörten Koppelvielfachen wesentlich kleiner, da nur die unmittelbar betroffenen virtuellen Verbindungen gestört werden. Dadurch entfallen aufwendige Überwachungsmaßnahmen in den redundanten Koppelvielfachen, die bei einem Redundanz-Konzept auf der Ebene von Übertragungsleitungen notwendig wären. Ein weiterer Vorteil besteht in dem Einfügen einer Zusatzkennung in die über die Koppelvielfache zu übertragenden Nachrichtenpakete. Durch diese Zusatzkennungen ist eine Übertragung von Nachrichtenpaketen über die redundanten Koppelvielfache möglich, ohne daß zwischen den redundanten Koppelvielfachen eine synchrone Arbeitsweise erforderlich ist. Dies ist insbesondere für redundante Paketvermittlungseinrichtungen in einem Breitband-Kommunikationsnetz von Bedeutung, in welchem Nachrichtenpakete mit einer hohen Übertragungsgeschwindigkeit zu übertragen sind.

Vorteilhafte Ausgestaltungen des Verfahrens gemäß der vorliegenden Erfindung ergeben sich aus den Patentansprüchen 2 bis 4. Der Vorteil dieser Ausgestaltungen besteht dabei in dem geringen Steuerungsaufwand für das Bereitstellen der den Nachrichtenpaketen jeweils beizufügenden Zusatzkennung bzw. für eine Überprüfung der über die Koppelvielfache übertragenen Nachrichtenpakete hinsichtlich einer fehlerfreien Übertragung.

Eine Schaltungsanordnung für die Durchführung des Verfahrens gemäß der vorliegenden Erfindung und deren vorteilhafte Ausgestaltungen ergeben sich aus den Patentansprüchen 5 bis 10. Der Vorteil besteht dabei in dem geringen schaltungstechnischen Aufwand für die Weiterleitung von Nachrichtenpaketen über die redundant ausgelegte Paketvermittlungseinrichtung.

Im folgenden wird nun die Erfindung anhand von Zeichnungen beispielswseise näher erläutert.
- FIG 1: zeigt ein Blockschaltbild einer Paketvermittlungseinrichtung, bei der die Erfindung angewandt ist,
- FIG 2: zeigt einen möglichen Aufbau der in FIG 1 lediglich schematisch dargestellten Behandlungseinrichtungen und
- FIG 3: zeigt einen möglichen Aufbau der in FIG 1 lediglich schematisch dargestellten Auswerteeinrichtungen.

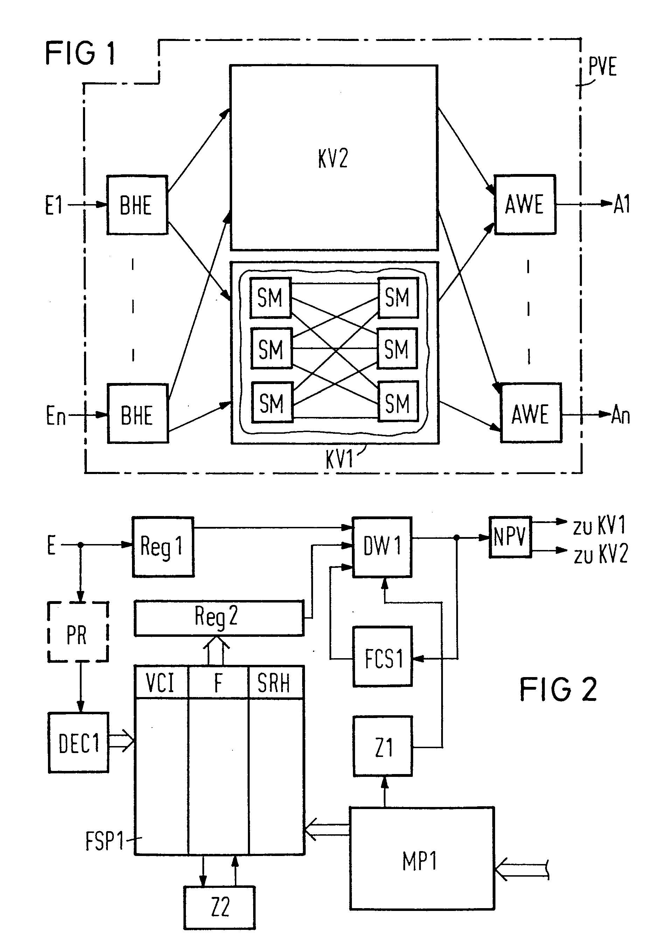

In FIG 1 ist eine Paketvermittlungsanlage PVE schematisch dargestellt, an welche eine Mehrzahl von Zubringerleitungen E1 bis En sowie eine Mehrzahl von Abnehmerleitungen A1 bis An angeschlossen sind. Von diesen sind in FIG 1 lediglich die Zubringerleitungen E1 und En und die Abnehmerleitungen A1 und An dargestellt. Auf den Zubringerleitungen und Abnehmerleitungen erfolgt jeweils eine Übertragung von Nachrichtenpaketen im Zuge von virtuellen Verbindungen nach einem asynchronen Übertragungsverfahren ("Asynchronous Transfer Mode"). Bei den Nachrichtenpaketen möge es sich um Pakete fester Länge handeln, welche jeweils über einen Paketkopf mit die jeweilige virtuelle Verbindung bezeichnenden Angaben sowie einen Informationsteil verfügen. In dem Informationsteil erfolgt die Übertragung der eigentlichen Nachrichtensignale. Unter Nachrichtensignale sollen dabei Daten und Textsignale sowie Sprach- bzw. Bildsignale in digitaler Form verstanden werden.

Wie aus FIG 1 hervorgeht, ist jeder der Zubringerleitungen E1 bis En eine Behandlungseinrichtung BHE zugeordnet. Eine solche Behandlungseinrichtung, auf deren Aufbau im folgenden noch näher eingegangen wird, fügt einerseits den über die jeweilige Zubringerleitung übertragenen, einer virtuellen Verbindung zugehörigen Nachrichtenpaketen jeweils eine für aufeinanderfolgende Nachrichtenpakete der jeweiligen virtuellen Verbindung sich ändernde Zusatzkennung bei. Andererseits bildet diese aus den um die Zusatzkennung ergänzten Nachrichtenpaketen zwei identische Nachrichtenpakete, die im folgenden als Nachrichtenpaket-Gruppe bezeichnet werden, und leitet diese zwei redundanten Koppelvielfachen KV1 und KV2 der Paketvermittlungseinrichtung PVE zu. In FIG 1 ist anhand des Koppelvielfachen KV1 schematisch angedeutet, daß die beiden Koppelvielfache jeweils eine Mehrzahl untereinander verbundener Schaltermodule SM aufweisen mögen. Da der Aufbau und die Wirkungsweise derartiger Koppelvielfache bereits bekannt ist, wird im folgenden darauf nicht näher eingegangen.

Jedes der Koppelvielfache weist eine Mehrzahl von Ausgangsleitungen auf. Dabei sind jeweils eine Ausgangsleitung des Koppelvielfachen KV1 und eine Ausgangsleitung des Koppelvielfachen KV2 gemeinsam einer gesonderten Auswerteeinrichtung AWE zugeführt. Diese Auswerteeinrichtungen sind mit jeweils einer der Abnehmerleitungen A1 bis An verbunden. Eine solche Auswerteeinrichtung übernimmt die über die beiden Koppelvielfache übertragenen Nachrichtenpakete und gibt durch ein im folgenden noch näher erläutertes Auswerten der den Nachrichtenpaketen jeweils beigefügten Zusatzkennung lediglich eines der zu einer Nachrichtenpaket-Gruppe gehörenden Nachrichtenpakete an die zugeordnete Abnehmerleitung ab.

Bezüglich der gerade erläuterten Paketvermittlungseinrichtung PVE sei noch darauf hingewiesen, daß diese zwar gemäß FIG 1 zwei redundante Koppelvielfache aufweist. Die Anzahl der redundanten Koppelvielfache kann jedoch auch in Abhängigkeit von der Ausfallwahrscheinlichkeit jedes der Koppelvielfache und der geforderten Werte für die Verfügbarkeit der Paketvermittlungseinrichtung entsprechend erhöht sein.

In FIG 2 ist ein möglicher Aufbau der zuvor erwähnten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Zubringerleitung, die in FIG 2 mit E bezeichnet ist, ist ein Register Reg1 verbunden. In dieses Register wird der Informationsteil eines über die Zubringerleitung übertragenen Nachrichtenpaketes aufgenommen. Der dem jeweiligen Nachrichtenpaket zugehörige Paketkopf wird dagegen einem Adressendecodierer DEC1 zugeführt. Dabei kann diesem Adressendecodierer auch eine in FIG 2 durch unterbrochene Linien angedeutete Prüfeinrichtung PR vorgeschaltet sein, die eine Überprüfung dieses Paketkopfes auf eine fehlerfreie Übertragung vornimmt, falls von der Übertragungsprozedur her eine solche Überprüfung vorgesehen ist. Dieser Adressendecodierer decodiert die in dem zugeführten Paketkopf in Form einer virtuellen Kanalnummer VCI enthaltenen, die jeweilige virtuelle Verbindung bezeichnenden Angaben und stellt entsprechende Ausgangssignale bereit. Diese sind einem Folgenummern-Speicher FSP1 als Adressensignale zugeführt. Der Folgenummern-Speicher FSP1 weist für jede der auf der zugehörigen Zubringerleitung E möglichen virtuellen Verbindungen eine gesonderte Speicherzelle auf. Diese Speicherzellen sind nach Maßgabe der von dem zuvor genannten Adressendecodierer DEC1 decodierten virtuellen Kanalnummern VCI ansteuerbar. In jeder der Speicherzellen sind, wie in FIG 2 schematisch dargestellt ist, eine virtuelle Kanalnummer VCI, eine Folgenummer F sowie eine selbtleitweglenkende Information SRH ("Self routing header") gespeichert. Diese drei Angaben bilden gemeinsam einen neuen Paketkopf, der, wie im folgenden noch erläutert werden wird, einem gerade in das Register Reg1 aufgenommenen Informationsteil eines Nachrichtenpaketes für dessen Weiterleitung vorangestellt wird. VCI stellt dabei diejenige virtuelle Kanalnummer dar, die für eine Weiterleitung eines Nachrichtenpaketes über die für die jeweilige virtuelle Verbindung in Frage kommende Abnehmerleitung zu benutzen ist. Bei der Folgenummer F handelt es sich um die zuvor erwähnte Zusatzkennung, die jedem in die Behandlungseinrichtung BHE aufgenommenen Nachrichtenpaket beizufügen ist. Diese Folgenummer wird für die einzelnen virtuellen Verbindungen individuell festgelegt. Dabei ist gemäß dem vorliegenden Ausführungsbeispiel vorgesehen, daß im Zuge des Aufbaues einer virtuellen Verbindung die jeweilige Folgenummer auf einen festgelegten Anfangswert gesetzt und mit jedem Zugriff auf die jeweilige Speicherzelle inkrementiert wird. Das Inkrementieren erfolgt dabei mit Hilfe eines Zählers Z2, wie in FIG 2 schematisch angedeutet ist. Die selbstleitweglenkende Information SRH dient innerhalb der in FIG 1 dargestellten Paketvermittlungseinrichtung PVE für eine Übertragung des jeweiligen Nachrichtenpaketes über die Koppelvielfache KV1 und KV2.

Die gerade erwähnten Angaben werden im übrigen von einer Steuereinrichtung MP1, die beispielsweise ein Mikroprozessor sein möge, her im Zuge des Aufbaus einer virtuellen Verbindung in die jeweils in Frage kommende Speicherzelle des Folgenummern-Speichers FSP1 eingetragen.

Bei einer zuvor erwähnten Ansteuerung einer Speicherzelle des Folgenummern-Speichers FSP1 durch den Adressendecodierer DEC1 wird der in dieser Speicherzelle gespeicherte Paketkopf ausgelesen und in ein Register Reg2 übernommen. Ausgangsseitig steht dieses Register mit einem Eingang einer Datenweiche DW1 in Verbindung. An einen zweiten Eingang dieser Datenweiche ist der Ausgang des zuvor erwähnten Registers Reg1 angeschlossen. Ausgangsseitig ist die Datenweiche DW1 einerseits mit einem Nachrichtenpaket-Vervielfacher NPV und andererseits mit einem Prüfsignal-Generator FCS1 verbunden. Dieser Prüfsignal-Generator steht ausgangsseitig mit einem dritten Eingang der Datenweiche DW1 in Verbindung.

Die zuvor erwähnte Datenweiche DW1 wird von einem Zähler Z1 derart gesteuert, daß zunächst der in das Register Reg2 übernommene Paketkopf und anschließend der in dem Register Reg1 gespeicherte Informationsteil seriell dem Nachrichtenpaket-Vervielfacher NPV zugeführt werden. Mit dem Durchlauf dieses so gebildeten Nachrichtenpaketes bildet der Prüfsignal-Generator FCS1 eine Prüfinformation ("frame check sequence"), die unter der Steuerung des Zählers Z1 dem Informationsteil des gerade weitergeleiteten Nachrichtenpaketes angefügt wird.

Der Zähler Z1 erhalt im übrigen für die Steuerung der Datenweiche DW1 von der zuvor erwähnten Steuereinrichtung MP1 her ein entsprechendes Startsignal zugeführt.

Der Nachrichtenpaket-Vervielfacher NPV nimmt eine Vervielfachung, bei dem hier vorliegenden Ausführungsbeispiel eine Verdoppelung, des ihm gerade zugeführten Nachrichtenpaketes vor und leitet die damit entstehenden identischen Nachrichtenpakete über gesonderte Leitungen an die in FIG 1 dargestellten Koppelvielfache KV1 und KV2 weiter. Dieser Nachrichtenpaket-Vervielfacher kann dabei beispielsweise aus einem Operationsverstärker mit mehreren Ausgängen gebildet sein. Der Übertragungsweg über diese Koppelvielfache ist dann durch die in den Nachrichtenpaketen übertragenen selbstleitweglenkenden Informationen festgelegt. Da den von dem Nachrichtenpaket-Vervielfacher NPV abgegebenen identischen Nachrichtenpaketen jeweils die gleiche selbstleitweglenkende Information beigefügt ist, durchlaufen die Nachrichtenpakete die Koppelvielfache KV1 und KV2 auf identischen Wegen.

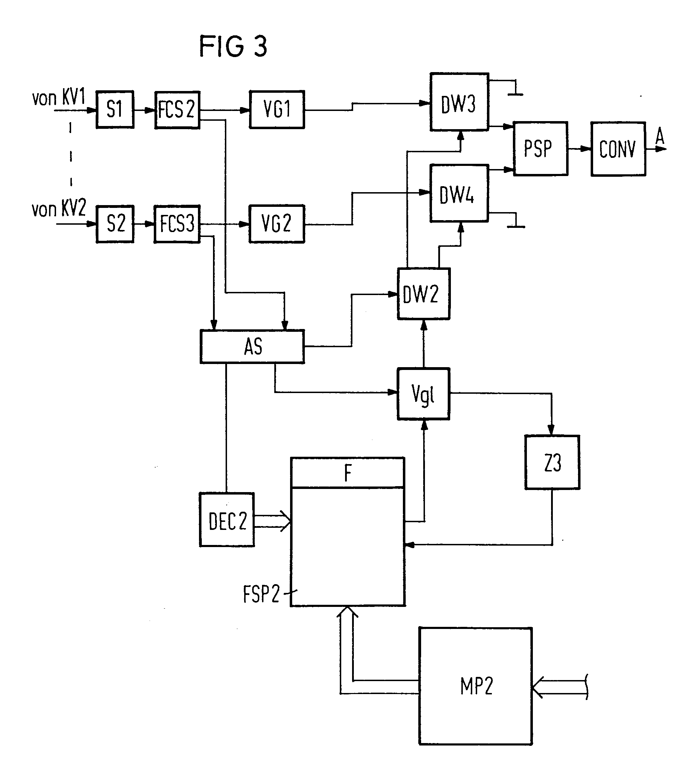

In FIG 3 ist ein möglicher Aufbau der in FIG 1 dargestellten Auswerteeinrichtungen AWE angegeben. Die über die Koppelvielfache KV1 und KV2 übertragenen Nachrichtenpakete einer Nachrichtenpaket-Gruppe durchlaufen zunächst mit S1 und S2 bezeichnete Schnittstelleneinrichtungen. Diese dienen im wesentlichen für die Erkennung des Beginns eines Nachrichtenpaketes. Diesen Schnittstelleneinrichtungen ist jeweils eine Prüfeinrichtung FCS2 bzw. FCS3 nachgeschaltet. Mit Hilfe dieser Prüfeinrichtung erfolgt anhand der den Nachrichtenpaketen jeweils angefügten Prüfinformation eine Überprüfung hinsichtlich einer fehlerfreien Übertragung. Liegt eine solche fehlerfreie Übertragung vor, so wird von der Prüfeinrichtung FCS2 das gerade überprüfte Nachrichtenpaket einer Verzögerungseinrichtung VG1 zugeführt. In entsprechender führt die Prüfeinrichtung FCS3 bei einer fehlerfreien Übertragung das gerade überprüfte Nachrichtenpaket einer Verzögerungseinrichtung VG2 zu. Der Paketkopf jedes der Nachrichtenpakete wird zusätzlich einer Auswahlschaltung AS ("arbiter") zugeleitet. Treffen dabei zwei Paketköpfe gleichzeitig ein, so wählt diese Auswahlschaltung lediglich einen aus und führt die in diesem Paketkopf enthaltene virtuelle Kanalnummer VCI einem Adressendecodierer DEC2 zu. Dieser decodiert diese virtuelle Kanalnummer und gibt entsprechende Ausgangssignale ab. Diese Ausgangssignale dienen als Adressensignale für die Ansteuerung eines Folgenummern-Speichers FSP2 mit einer Mehrzahl von Speicherzellen. Diese Speicherzellen sind den virtuellen Verbindungen, die über die mit der Auswerteeinrichtung AWE verbundene Abnehmerleitung verlaufen können, individuell zugeordnet. In jeder dieser Speicherzellen ist dabei eine Folgenummer F gespeichert, die im Zuge des Aufbaus der jeweiligen virtuellen Verbindung von einer Steuereinrichtung MP2 her auf den gleichen Anfangswert gesetzt wird, wie die für die jeweilige virtuelle Verbindung in dem Folgenummern-Speicher FSP1 (FIG 2) gespeicherte Folgenummer. Die Steuereinrichtung MP2 kann im übrigen aus einem Mikroprozessor bestehen.

Auf die zuvor erwähnte Ansteuerung des Folgenummern-Speichers FSP2 durch den Adressendecodierer DEC2 wird die in der in Frage kommenden Speicherzelle gespeicherte Folgenummer F einem ersten Eingang eines Vergleichers Vgl zugeführt. Einem zweiten Eingang dieses Vergleichers wird dagegen von der Auswahlschaltung AS her die in dem gerade ausgewählten Paketkopf enthaltene Folgenummer zugeführt. Mit einem ersten Ausgang steht der Vergleicher Vgl mit einer Datenweiche DW2 in Verbindung. Diese Datenweiche wird von der Auswahlschaltung AS her nach Maßgabe des von dieser gerade ausgewählten Paketkopfes derart gesteuert, daß ein von dem Vergleicher Vgl abgegebenes Vergleichsignal entweder einer Datenweiche DW3 oder einer Datenweiche DW4 als Steuersignal zugeführt ist. Die Datenweiche DW3 steht dabei eingangsseitig mit der Verzögerungseinrichtung VG1, die Datenweiche DW4 dagegen mit der Verzögerungseinrichtung VG2 in Verbindung. Ein erster Ausgang jeder der Datenweichen DW3 und DW4 ist an einem als Durchlaufspeicher ("first-in-first-out"-Speicher) ausgebildeten Pufferspeicher PSP angeschlossen. Ein zweiter Ausgang jeder der beiden Datenweichen ist dagegen auf Masse gelegt.

Bei einer Übereinstimmung der dem Vergleicher Vgl gerade zugeführten Folgenummern steuert dieser die von der Auswahlschaltung AS über die Datenweiche DW2 ausgewählte Datenweiche DW3 bzw. DW4 derart, daß das von der zugehörigen Verzögerungseinrichtung (VG1 bzw. VG2) abgegebene Nachrichtenpaket in den Pufferspeicher PSP übernommen wird. Gleichzeitig führt der Vergleicher die von dem Folgenummern-Speicher FSP2 her abgegebene Folgenummer über einen zweiten Ausgang einem Zähler Z3 zu, der diese Folgenummer inkrementiert und die daraus resultierende Folgenummer als aktuelle Folgenummer in die in Frage kommende Speicherzelle des Folgenummern-Speichers FSP2 einträgt. Dabei wird die bisher darin gespeicherte Folgenummer überschrieben.

Wählt die Auswahlschaltung AS anschließend für eine weitere Auswertung einen Paketkopf eines Nachrichtenpaketes aus, welches zu derselben Nachrichtenpaket-Gruppe gehört wie das zuvor in den Pufferspeicher PSP eingetragene Nachrichtenpaket, so stellt der Vergleicher Vgl aufgrund der in dem Folgenummern-Speicher FSP2 geänderten Folgenummer eine Nichtübereinstimmung der miteinander verglichenen Folgenummern fest. Aufgrund dieses Vergleichsergebnisses steuert der Vergleicher Vgl die in Frage kommende Datenweiche DW3 bzw. DW4 derart, daß das die zugehörige Verzögerungseinrichtung VG1 bzw. VG2 durchlaufende Nachrichtenpaket dem auf Masse gelegten Ausgang der betreffenden Datenweiche zugeführt ist. Auf diese Weise ist sichergestellt, daß lediglich das erste erkannte der zu einer Nachrichtenpaket-Gruppe gehörenden Nachrichtenpakete für eine Weiterleitung an die zugehörige Abnehmerleitung in den Pufferspeicher PSP eingetragen wird. Das bei dem vorliegenden Ausführungsbeispiel weitere Nachrichtenpaket einer Nachrichtenpaket-Gruppe wird dagegen als Kopie des zuvor weitergeleitete Nachrichtenpaketes angesehen und demzufolge unterdrückt.

Die in den Pufferspeicher PSP aufgenommenen Nachrichtenpakete werden in der Reihenfolge ihres Einschreibens an die mit der in FIG 3 dargestellten Auswerteeinrichtung AWE verbundene Abnehmerleitung weitergeleitet. Diese Abnehmerleitung ist in FIG 3 mit A bezeichnet. Bei diesem Weiterleiten durchlaufen die einzelnen Nachrichtenpakete einen Umsetzer CONV, der die in den Nachrichtenpaketen bisher enthaltene selbstleitweglenkende Information entfernt. Diese diente lediglich innerhalb der in FIG 1 dargestellten Paketvermittlungseinrichtung PVE für die Übertragung von Nachrichtenpaketen über die Koppelvielfache KV1 und KV2. Für eine Weiterleitung der Nachrichtenpakete über die zugehörige Abnehmerleitung sind derartige Informationen nicht mehr erforderlich.

Abweichend von dem zuvor erläuterten Ausführungsbeispiel kann den einer Nachrichtenpaket-Gruppe zugehörigen Nachrichtenpaketen von der Behandlungseinrichtung BHE her anstelle einer für die jeweilige virtuelle Verbindung festgelegte Folgenummer auch eine von der jeweiligen virtuellen Verbindung unabhängige Zusatzkennung beigefügt sein, die sich für aufeinanderfolgende Nachrichtenpaket-Gruppen verändert. Als derartige Zusatzkennungen können beispielsweise Zählersignale eines frei umlaufenden Zählers benutzt sein. In diesem Falle kann eine Speicherung der Folgenummern in dem Folgenummern-Speicher FSP1 (FIG 2) für die einzelnen virtuellen Verbindungen entfallen. In der jeweiligen Auswerteeinrichtung AWE ist dann für die jeweilige virtuelle Verbindung lediglich mit dem erstmaligen Auftreten einer bestimmten Zusatzkennung in einem aufgenommenen Nachrichtenpaket diese Zusatzkennung für eine vorgegebene Zeit in einem Speicher festzuhalten und das jeweilige Nachrichtenpaket an die in Frage kommende Abnehmerleitung weiterzuleiten. Bei einem erneuten Auftreten dieser Zusatzkennung ist das zugehörige Nachrichtenpaket als Kopie des zuvor weitergeleiteten Nachrichtenpaketes zu betrachten und demzufolge zu unterdrücken.

Darüber hinaus kann die Weiterleitung von Nachrichtenpaketen über die Koppelvielfache der Paktetvermittlungseinrichtung PVE (FIG 1) nach dem bekannten Umwerteprinzip erfolgen, so daß das Einfügen von selbstleitweglenkenden Informationen in die Nachrichtenpakete entfallen kann. Damit kann aber auch das Speichern dieser Informationen in dem Folgenummern-Speicher FSP1 entfallen.

Außerdem sei noch darauf hingewiesen, daß bei Vorhandensein einer Vielzahl von Koppelvielfachen in einer Paketvermittlungseinrichtung die Bildung einer Nachrichtenpaket-Gruppe entweder mit Hilfe eines einzigen Nachrichtenpaket-Vervielfachers mit einer entsprechenden Anzahl von Ausgängen oder stufenweise unter Verwendung mehrerer Nachrichtenpaket-Vervielfacher erfolgen kann. Darüber hinaus kann bei Vorhandensein einer Vielzahl von Koppelvielfachen auch die Auflösung einer Nachrichtenpaket-Gruppe mit einer entsprechenden Vielzahl von Nachrichtenpaketen stufenweise unter Verwendung einer Mehrzahl von zuvor beschriebenen Auswerteeinrichtungen erfolgen.

Abschließend sei auch noch darauf hingewiesen, daß die jedem Nachrichtenpaket von der Behandlungseinrichtung BHE her beigefügte Prüfinformation auch derart festgelegt sein kann, daß durch diese lediglich der Paketkopf eines Nachrichtenpaketes erfaßt ist und daß diese Prüfinformation dem Paketkopf angefügt ist. In der jeweiligen Auswerteeinrichtung AWE erfolgt dann anhand der den Nachrichtenpaketen beigefügten Prüfinformationen lediglich eine Überprüfung der zugehörigen Paketköpfe hinsichtlich einer fehlerfreien Übertragung.

## Patentansprüche

1. Verfahren zum Weiterleiten von auf Zubringerleitungen (E1,..., En) im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache (KV1, KV2) aufweisende Paketvermittlungseinrichtung (PVE) zu mit dieser verbundenen Abnehmerleitungen (A1,..., An) hin,
**dadurch gekennzeichnet**,
daß für jedes der auf einer der Zubringerleitungen im Zuge einer virtuellen Verbindung übertragenen Nachrichtenpakete durch Vermehrfachen eine Nachrichtenpaket-Gruppe mit einer der Anzahl der redundanten Koppelvielfache entsprechenden Anzahl von identischen Nachrichtenpaketen gebildet wird,
daß jedem der Nachrichtenpakete einer Nachrichtenpaket-Gruppe eine identische, für aufeinanderfolgende Nachrichtenpaket-Gruppen sich ändernde Zusatzkennung beigefügt wird,
daß die Nachrichtenpakete einer Nachrichtenpaket-Gruppe getrennt über die redundanten Koppelvielfache in Richtung zu der für die jeweilige virtuelle Verbindung in Frage kommenden Abnehmerleitung hin übertragen werden
und daß nach einer solchen Übertragung über die redundanten Koppelvielfache anhand der den Nachrichtenpaketen jeweils beigefügten Zusatzkennung lediglich eines der zu einer Nachrichtenpaket-Gruppe gehörenden Nachrichtenpakete an die in Frage kommende Abnehmerleitung weitergeleitet wird.

2. Verfahren nach Anspruch 1,
**dadurch gekennzeichnet**,
daß als Zusatzkennung eine jeweils in den Paketkopf der einer virtuellen Verbindung zugehörigen Nachrichtenpakete eingefügte, für die jeweilige virtuelle Verbindung fortlaufend vergebene Nachrichtenpaket-Folgenummer benutzt wird.

3. Verfahren nach Anspruch 1 oder 2,
**dadurch gekennzeichnet**,
daß jedem der zu einer Nachrichtenpaket-Gruppe gehörenden Nachrichtenpakete jeweils eine Prüfinformation beigefügt wird und daß nach der Übertragung von Nachrichtenpaketen über die redundanten Koppelvielfache zunächst anhand der den Nachrichtenpaketen jeweils beigefügten Prüfinformation eine Überprüfung des jeweiligen Nachrichtenpaketes bzw. Paketkopfes hinsichtlich einer fehlerfreien Übertragung durchgeführt wird.

4. Verfahren nach einem der Ansprüche 1 bis 3,
**dadurch gekennzeichnet**,
daß durch bei der Bildung einer Nachrichtenpaket-Gruppe in die Paketköpfe der Nachrichtenpakete eingetragene selbstleitweglenkende Informationen die der jeweiligen Nachrichtenpaket-Gruppe zugehörenden Nachrichtenpakete auf gleichen Wegen über die redundanten Koppelvielfache übertragen werden.

5. Schaltungsanordnung zum Weiterleiten von auf Zubringerleitungen (E1,..., En) im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache (KV1, KV2) aufweisende Pakektvermittlungseinrichtung (PVE) zu mit dieser verbundenen Abnehmerleitungen (A1, ..., An) hin,
**dadurch gekennzeichnet**,
daß jeder der Zubringerleitungen eine Behandlungseinrichtung (BHE) zugeordnet ist, welche einerseits den über die jeweilige Zubringerleitung übertragenen Nachrichtenpaketen jeweils eine für aufeinanderfolgende Nachrichtenpakete sich ändernde Zusatzkennung beifügt und andererseits aus den um die Zusatzkennung ergänzten Nachrichtenpaketen jeweils eine NachrichtenpaketGruppe mit einer der Anzahl der redundanten Koppelvielfache entsprechenden Anzahl von identischen Nachrichtenpaketen bildet, die den redundanten Koppelvielfachen zugeführt sind,
und daß jeder der Abnehmerleitungen eine Auswerteeinrichtung (AWE) zugeordnet ist, welche über die redundanten Koppelvielfache übertragene Nachrichtenpakete aufnimmt und anhand der den Nachrichtenpaketen jeweils beigefügten Zusatzkennung und gegebenenfalls der von der Behandlungseinrichtung (BHE) her gerade bei der Bildung einer Nachrichtenpaket-Gruppe für die jeweilige virtuelle Verbindung benutzten, zur Verfügung stehenden Zusatzkennung lediglich eines der zu einer Nachrichtenpaket-Gruppe gehörenden Nachrichtenpakete an die zugeordnete Ausgangsleitung abgibt.

6. Schaltungsanordnung nach Anspruch 5,
**dadurch gekennzeichnet**,
daß in der Behandlungseinrichtung (BHE) und der Auswerteeinrichtung (AWE) jeweils eine Speichereinrichtung (FSP1, FSP2) mit einer Mehrzahl von Speicherzellen vorgesehen ist, in welchen für die einzelnen virtuellen Verbindungen individuell die für die Bildung bzw. für die Auswertung einer Nachrichtenpaket-Gruppe gerade aktuelle Zusatzkennung gespeichert ist,
daß die Speicherzellen jeweils durch die jeweilige virtuelle Verbindung bezeichnende, in dem Paketkopf der Nachrichtenpakete jeweils enthaltene Angaben für eine Bereitstellung der gespeicherten Zusatzkennung ansteuerbar sind,
und daß auf jede Ansteuerung einer Speicherzelle hin die darin gespeicherte Zusatzkennung aktualisiert ist.

7. Schaltungsanordnung nach Anspruch 6,
**dadurch gekennzeichnet**,
daß in den Speicherzellen jeweils als Zusatzkennung eine dem Paketkopf der einzelnen Nachrichtenpakete beizufügende Nachrichtenpaket-Folgenummer gespeichert ist, welche im Zuge des Verbindungsaufbaues der jeweiligen virtuellen Verbindung auf einen festgelegten Anfangswert gesetzt und mit jeder Ansteuerung der jeweiligen Speicherzelle inkrementiert ist.

8. Schaltungsanordnung nach Anspruch 6 oder 7,
**dadurch gekennzeichnet**,
daß in den Speicherzellen der der Behandlungseinrichtung (BHE) zugehörigen Speichereinrichtung (FSP1) zusätzlich jeweils eine für die jeweilige virtuelle Verbindung festgelegte, den Paketköpfen der an die redundanten Koppelvielfache weiterzuleitenden Nachrichtenpakete jeweils beizufügende selbtleitweglenkende Information gespeichert ist.

9. Schaltungsanordnung nach einem der Ansprüche 6 bis 8,
**dadurch gekennzeichnet**,
daß in der Auswerteeinrichtung (AWE) eine Vergleicheranordnung (Vgl) vorgesehen ist, welche die in einem gerade von einem der redundanten Koppelvielfachen (KV1, KV2) übernommenen Nachrichtenpaket enthaltene Zusatzkennung mit der von der Speichereinrichtung (FSP2) bereitgestellten Zusatzkennung vergleicht und bei einer Übereinstimmung der beiden Zusatzkennungen die Weiterleitung des jeweiligen Nachrichtenpaketes an die zugeordnete Ausgangsleitung steuert.

10. Schaltungsanordnung nach einem der Ansprüche 5 bis 9,
**dadurch gekennzeichnet**,
daß der Behandlungseinrichtung (BHE) ein Prüfsignal-Generator (FCS1) zugehörig ist, der den Nachrichtenpaketen zusätzlich jeweils eine Prüfinformation beifügt, daß in der Auswerteeinrichtung (AWE) jedem der redundanten Koppelvielfachen eine Prüfeinrichtung (FCS2, FCS3) zugeordnet ist, welche anhand der den von dem zugeordneten Koppelvielfachen übernommenen Nachrichtenpaketen jeweils beigefügten Prüfinformation eine Überprüfung hinsichtlich einer fehlerfreien Übertragung des jeweiligen Nachrichtenpaketes bzw. jeweiligen Paketkopfes durchführt, und daß die Auswerteeinrichtung (AWE) lediglich bei einer fehlerfreien Übertragung eines Nachrichtenpaketes eine Auswertung der diesem beigefügten Zusatzkennung vornimmt.

## Claims

1. Method for forwarding message packets, which are transmitted on offering trunks (E1,..., En) in the course of virtual connections in accordance with an asynchronous transmission method and have a packet header identifying the respective virtual connection, via a packet switching device (PVE) having at least two redundant switching matrices (KV1, KV2) to serving trunks (A1,..., An) connected to said packet switching device, characterized in that for each of the message packets transmitted on one of the offering trunks in the course of a virtual connection, a message packet group having a number of identical message packets corresponding to the number of redundant switching matrices is formed by multiplication, in that an identical auxiliary identifier that changes for successive message packet groups is appended to each of the message packets of a message packet group, in that the message packets of a message packet group are transmitted separately via the redundant switching matrices in the direction of the serving trunk concerned for the respective virtual connection, and in that after such a transmission via the redundant switching matrices, only one of the message packets belonging to a message packet group is forwarded to the serving trunk concerned on the basis of the auxiliary identifier appended to the message packets in each case.

2. Method according to Claim 1, characterized in that a message packet sequence number which is inserted in each case into the packet header of the message packets belonging to a virtual connection and is consecutively assigned for the respective virtual connection is used as auxiliary identifier.

3. Method according to Claim 1 or 2, characterized in that checking information is appended to each of the message packets belonging to a message packet group in each case, and in that after the transmission of message packets via the redundant switching matrices, first of all the respective message packet or packet header respectively is checked for error-free transmission on the basis of the checking information appended to the message packets in each case.

4. Method according to one of Claims 1 to 3, characterized in that the message packets belonging to the respective message packet group are transmitted on the same paths via the redundant switching matrices on the basis of self-routing information entered in the packet headers of the message packets when a message packet group is formed.

5. Circuit arrangement for forwarding message packets, which are transmitted on offering trunks (E1,..., En) in the course of virtual connections in accordance with an asynchronous transmission method and have a packet header identifying the respective virtual connection, via a packet switching device (PVE) having at least two redundant switching matrices (KV1, KV2) to serving trunks (A1,..., An) connected to said packet switching device, characterized in that assigned to each of the offering trunks is a handling device (BHE) which on the one hand appends an auxiliary identifier that changes for successive message packets in each case to the message packets transmitted via the respective offering trunk, and on the other hand forms a message packet group having a number of identical message packets corresponding to the number of redundant switching matrices in each case from the message packets augmented by the auxiliary identifier, which message packets are supplied to the redundant switching matrices, and in that assigned to each of the serving trunks is an evaluation device (AWE) which receives the message packets transmitted via the redundant switching matrices and outputs only one of the message packets belonging to a message packet group to the assigned output line on the basis of the auxiliary identifier appended to the message packets in each case, and if necessary of the auxiliary identifier available that was just used by the handling device (BHE) for the formation of a message packet group for the respective virtual connection.

6. Circuit arrangement according to Claim 5, characterized in that provided in the handling device (BHE) and the evaluation device (AWE) in each case is a memory means (FSP1, FSP2) having a plurality of memory cells, in which the respective current auxiliary identifier for the formation and for the evaluation of a message packet group respectively is stored individually for the individual virtual connections, in that the memory cells can be selected in each case to make the stored auxiliary identifier available by the information identifying the respective virtual connection and contained in the packet header of the message packets in each case, and in that the auxiliary identifier stored therein is updated every time a memory cell is selected.

7. Circuit arrangement according to Claim 6, characterized in that a message packet sequence number which is to be appended to the packet header of the individual message packets is stored in the memory cells as auxiliary identifier in each case, which sequence number is set to a defined starting value in the course of the connection establishment of the respective virtual connection and is incremented every time the respective memory cell is selected.

8. Circuit arrangement according to Claim 6 or 7, characterized in that in each case self-routing information which is defined for the respective virtual connection and is to be appended to the packet headers of the message packets to be forwarded to the redundant switching matrices in each case is additionally stored in the memory cells of the memory means (FSP1) associated with the handling device (BHE).

9. Circuit arrangement according to one of Claims 6 to 8, characterized in that provided in the evaluation device (AWE) is a comparator arrangement (Vgl) which compares the auxiliary identifier contained in a message packet just accepted from one of the redundant switching matrices (KV1, KV2) with the auxiliary identifier made available by the memory means (FSP2), and which controls the forwarding of the respective message packet to the assigned output line if the two auxiliary identifiers match.

10. Circuit arrangement according to one of Claims 5 to 9, characterized in that associated with the handling device (BHE) is a checking signal generator (FCS1) which additionally appends checking information to the message packets in each case, in that a checking device (FCS2, FCS3) is assigned to each of the redundant switching matrices in the evaluation device (AWE), which checking device performs a check with respect to error-free transmission of the respective message packet or respective message header on the basis of the checking information appended to the message packets accepted by the assigned switching matrix in each case, and in that the evaluation device (AWE) evaluates the auxiliary identifier appended to a message packet only if the latter has been transmitted without error.

## Revendications

1. Procédé pour transmettre des paquets d'informations qui sont transmis dans des lignes additionnelles (E1, ..., En) au cours de liaisons individuelles conformément à un procédé de transmission asynchrone et possèdent une tête de paquet désignant la liaison virtuelle respective, par l'intermédiaire d'un dispositif de commutation de paquets (PVE), qui possède au moins deux multiples de couplage redondants (KV1, KV2), à des lignes d'abonnés (A1, ..., An) reliées à ce dispositif, caractérisé par le fait
que pour chacun des paquets d'informations transmis dans l'une des lignes additionnelles au cours d'une liaison virtuelle, des multiples de couplage forment un groupe de paquets d'informations possédant un nombre de paquets d'informations identiques, qui correspond au nombre des multiples de couplage redondants,
qu'à chacun des paquets d'informations d'un groupe de paquets d'informations est ajoutée une caractérisation supplémentaire identique, qui varie pour des groupes de paquets d'informations successifs,
que les paquets d'informations d'un groupe de paquets d'informations sont transmis séparément par l'intermédiaire des multiples de couplage redondants, en direction de la ligne d'abonné qui intervient pour la liaison virtuelle respective, et
qu'après une telle transmission par l'intermédiaire des multiples de couplage redondants, seul l'un des paquets d'informations, qui fait partie d'un groupe de paquets d'informations, est retransmis à la ligne d'abonné entrant en jeu, sur la base de la caractérisation supplémentaire ajoutée respectivement au paquet d'informations.

2. Procédé suivant la revendication 1, caractérisé par le fait qu'on utilise comme caractérisation supplémentaire, un numéro courant de paquet d'informations, qui est inséré respectivement dans la tête des paquets d'informations associés à une liaison virtuelle, et qui est affecté en permanence à la liaison virtuelle respective.

3. Procédé suivant la revendication 1 ou 2, caractérisé par le fait que respectivement une information de contrôle est ajoutée à chacun des paquets d'informations, qui font partie d'un groupe de paquets d'informations, et qu'après la transmission de paquets d'informations par l'intermédiaire des multiples de couplage redondants, un contrôle du paquet d'informations respectif ou de la tête respective du paquet d'informations est exécuté sur la base de l'information de contrôle adjointe respectivement au paquet d'informations, pour déterminer si la transmission s'effectue sans erreur.

4. Procédé suivant l'une des revendications 1 à 3, caractérisé par le fait que les paquets d'informations qui sont associés au groupe respectif de paquets d'informations, sont transmis par des voies identiques par l'intermédiaire des multiples de couplage redondants, au moyen d'informations d'acheminement automatique introduites dans les têtes des paquets d'informations lors de la formation d'un groupe de paquets d'informations.

5. Montage pour la transmission de paquets d'informations qui sont transmis dans des lignes additionnelles (E1, ..., En) au cours de liaisons individuelles conformément à un procédé de transmission asynchrone et possèdent une tête de paquet désignant la liaison virtuelle respective, par l'intermédiaire d'un dispositif de commutation de paquets (PVE), qui possède au moins deux multiples de couplage redondants (KV1, KV2), à des lignes d'abonnés (A1, ..., An) reliées à ce dispositif, caractérisé par le fait
qu'à chacune des lignes additionnelles est associé un dispositif de traitement (BHE), qui, d'une part, ajoute au paquet d'informations transmis par l'intermédiaire de la ligne additionnelle respective, respectivement une caractéristique additionnelle qui varie pour des paquets d'informations successifs, et, d'autre part, forme, à partir des paquets d'informations complétés de la caractérisation additionnelle, respectivement un groupe de paquets d'informations possédant un nombre, qui correspond au nombre des multiples de couplage redondants, de paquets d'informations identiques, qui sont envoyés aux multiples de couplage redondants, et
qu'à chacune des lignes d'abonnés est associé un dispositif d'évaluation (AWE), qui reçoit des paquets d'informations transmis par l'intermédiaire des multiples de couplage redondants et envoie uniquement l'un des paquets d'informations faisant partie d'un groupe de paquets d'informations, à la ligne de sortie associée, sur la base de la caractérisation additionnelle, adjointe respectivement au paquet d'informations, et éventuellement sur la base de la caractérisation additionnelle disponible, utilisée à partir du dispositif de traitement (BHE) précisément lors de la formation d'un groupe de paquets d'informations pour la liaison virtuelle respective.

6. Montage suivant la revendication 5, caractérisé par le fait que dans le dispositif de traitement (BHE) et dans le dispositif d'évaluation (AWE), il est prévu respectivement un dispositif de mémoire (FSP1, FSP2) possédant une multiplicité de cellules de mémoire, dans lesquelles la caractérisation additionnelle supplémentaire précisément actuelle pour la formation ou l'évaluation d'un groupe de paquets de données, est mémorisée individuellement pour les différentes liaisons virtuelles, que les cellules de mémoire peuvent être commandées respectivement au moyen d'indications, qui sont contenues respectivement dans la tête des paquets d'informations, pour une préparation de la caractérisation supplémentaire mémorisée, et que lors de chaque commande envoyée à une cellule de mémoire, la caractérisation supplémentaire, qui y est mémorisée, est actualisée.

7. Montage suivant la revendication 6, caractérisé par le fait que dans les cellules de mémoire est mémorisé, respectivement, en tant que caractérisation supplémentaire, un numéro d'ordre de paquet d'informations qui doit être adjoint à la tête des paquets individuels d'informations et qui, au cours de l'établissement de la liaison virtuelle respective, est réglé sur une valeur initiale fixée et est incrémenté lors de chaque commande de la cellule de mémoire respective.

8. Montage suivant la revendication 6 ou 7, caractérisé par le fait qu'en supplément, respectivement une information de cheminement automatique, qui est fixée pour la liaison virtuelle respective et doit être respectivement ajoutée aux têtes des paquets d'informations qui doivent être retransmis aux multiples de couplage redondants, est mémorisée dans les cellules de mémoire du dispositif de mémoire (FSP) associé au dispositif de traitement (BHE).

9. Montage suivant l'une des revendications 6 à 8, caractérisé par le fait que dans le dispositif d'évaluation (AWE) est prévu un dispositif comparateur (Vg1), qui compare la caractérisation supplémentaire contenue dans un paquet d'informations reçu précisément de l'un des multiples de couplage redondants (KV1, KV2), à la caractérisation supplémentaire préparée par le dispositif de mémoire (FSP2), et, en cas de coïncidence des deux caractérisations supplémentaires, commande la transmission du paquet d'informations respectif à la ligne de sortie associée.

10. Montage suivant l'une des revendications 5 à 9, caractérisé par le fait qu'au dispositif de traitement (BHE) est associé un générateur de signaux de contrôle (FCS1), qui ajoute, en supplément, respectivement une information de contrôle aux paquets d'informations, que dans le dispositif d'évaluation (AWE), à chacun des multiples de couplage redondants est associé un dispositif de contrôle (FCS2, FCS3) qui, sur la base de l'information de contrôle respectivement ajoutée au paquet d'informations transféré par le multiple de couplage associé, exécute un contrôle déterminant si la transmission du paquet d'informations respectif ou de la tête respective du paquet est exécutée sans erreur, et que, uniquement dans le cas d'une transmission sans erreur d'un paquet d'informations, le dispositif d'évaluation (AWE) réalise une évaluation de la caractérisation supplémentaire rajoutée à ce paquet.
